# EUROPEAN PATENT APPLICATION

(11) **EP 1 394 997 A1**
(43) Date of publication of application: **03.03.2004**
(21) Application number: 03254925.5
(22) Date of filing: 07.08.2003
(51) Int. Cl.: H04L 12/46

(54) **Dynamic connection establishment in a meshed communication system**

(30) Priority: 28.08.2002 US 230039
(71) Applicant: Hughes Electronics Corporation, El Segundo, California 90245 (US)
(72) Inventor: Border, John, Poolesville, Maryland 20837 (US); Friedman, Daniel, Silver Spring, Maryland 20910 (US)
(74) Representative: Jackson, Richard Eric

(57) **Abstract**

An approach for dynamic establishment and tear-down of connections over a meshed communication system (101) is disclosed. The system includes a first node (103, 105, 107, 109, 111) that receives a request to establish a communication session with a host (A, B, C1, C2, D). The system also includes a second node (103, 105, 107, 109, 111) configured to communicate with the first node (103, 105, 107, 109, 111) and to provide connectivity for the host (A, B, C1, C2, D). The first node (103, 105, 107, 109, 111) is further configured to determine whether the second node (103, 105, 107, 109, 111) is specified in a list indicating peer relationships to the first node (103, 105, 107, 109, 111) in response to the request. The first node (103, 105, 107, 109, 111) dynamically establishes a connection to the one node (103, 105, 107, 109, 111) based on the determination. This approach has particular applicability to networks with high latency - e.g., a satellite network.

## Description

### FIELD OF THE INVENTION

The present invention relates to communication systems, and more particularly, to dynamic connection establishment.

### BACKGROUND OF THE INVENTION

The entrenchment of data networking into the routines of modem society, as evidenced by the immense popularity of the Internet, particularly the World Wide Web, has placed ever-growing demands on service providers to continually improve network performance. To meet this challenge, service providers have invested heavily in upgrading their networks to increase system capacity (i.e., bandwidth). In many circumstances, such upgrades may not be feasible economically or the physical constraints of the communication system do not permit simply "upgrading." Accordingly, service providers have also invested in developing techniques to optimize the performance of their networks.

Because much of today's networks either operate with or are required to interface with the Transmission Control Protocol/Internet Protocol (TCP/IP) suite, attention has focused on optimizing TCP/IP-based networking operations. As the networking standard for the global Internet, TCP/IP has earned such acceptance in the industry because of its flexibility and rich heritage in the research community. The Transmission Control Protocol (TCP) is the dominant protocol in use today on the Internet. TCP is carried by the Internet Protocol (IP) and is used in a variety of applications including reliable file transfer and Internet web page access applications. Common TCP/IP applications include Telnet for remote log-in, File Transfer Protocol (FTP), Simple Mail Transfer Protocol (SMTP) for electronic mail, Simple Network Management Protocol (SNMP), HyperText Transfer Protocol (HTTP) used in the World-Wide Web (WWW), and many others.

Among other concerns, TCP/IP was not designed for operation in a high-latency network, such as a satellite system, and so may provide poor performance in such settings. TCP was designed to be very flexible and to work over a wide variety of communication links, including both slow and fast links, high latency links, and links with low and high error rates. However, while TCP (and other, higher-layer protocols) works with many different kinds of links, TCP performance, in particular the throughput possible across the TCP connection, is affected by the characteristics of the link in which it is used. There are many link-layer design considerations that should be taken into account when designing a link-layer service that is intended to support Internet protocols. However, not all characteristics can be compensated for by choices in the link layer design. TCP has been designed to be very flexible with respect to the links which it traverses. Such flexibility is achieved at the cost of sub-optimal operation in a number of environments vis-à-vis a tailored protocol. The tailored protocol, which is usually proprietary in nature, may be more optimal, but greatly lacks flexibility in terms of networking environments and interoperability. This drawback is particularly prominent in a high-latency network, such as a satellite system.

Traditional satellite systems employ a star topology for communication between a single "hub" terminal and "remote" terminals. Each of the remote terminals supports a small number of connections with the single hub terminal, while the hub terminal is required to maintain a large number of connections with the multiple remote terminals. Under this conventional approach, the network topology is generally stable, such that reliable connections can be established permanently. These connections are rarely torn down, but for exceptional circumstances, such as terminal retirement or failure, and thus are static. This conventional architecture permits the remote terminals to support few connections, thereby permitting the cost of the remote terminals to be relatively low. This conventional approach cannot be economically extended to a meshed topology.

It is recognized that deployment of a meshed topology satellite network introduces a variety of engineering obstacles. Most notably, the peer-to-peer relationships of the remote terminals are not necessarily known in advance (i.e., *a priori*); as such, the terminals cannot be pre-configured to establish connections with these other terminals. Even if such relationships can be reasonably ascertained, the effort and cost of configuring the terminals with the relationship information appropriate to each could be prohibitive. Consequently, scalability of such a network is problematic.

Based on the foregoing, there is a clear need for improved approaches to optimizing network performance, while achieving flexibility. There is also a need to enhance network performance, without a costly infrastructure investment or hindering scalability. There is a further need for a mechanism to feasibly support a meshed topology in a high-latency network. Therefore, an approach for optimizing network performance of a meshed network is highly desirable.

### SUMMARY OF THE INVENTION

The present invention addresses the above stated needs by providing an approach for dynamically establishing and tearing down communication connections in a meshed network, such as a satellite system. A source node utilizes a list indicating peer relationships for managing connections over the meshed network. In response to a request for establishing a communication session with a remote host, the source node determines a next hop or destination node that serves the remote host using, in an exemplary embodiment, a routing table. The source node also determines whether the destination node is specified in the list. If the destination node is on the list, the source node dynamically establishes a connection to the destination node. However, if the destination node is not on the list, the source node adds the destination node to the list, possibly also removing another node from the list according to a prescribed scheme (e.g., a least-recently-used scheme), if necessary. Thereafter, the connection can then be established. In addition, the source node can support a communication session that utilizes spoofing to enhance network performance. Under this approach, system resources are used efficiently. Furthermore, this approach improves network performance, while promoting a scalable architecture.

According to one aspect of an embodiment of the present invention, a method for communicating over a meshed network including a plurality of nodes is disclosed. The method includes receiving a request to communicate with a host served by one of the plurality of nodes. The method also includes determining whether the one node is within a list specifying connectivity relationships for a portion of the plurality of nodes in response to the request. The method further includes dynamically establishing a connection to the one node based on the determining step.

According to another aspect of an embodiment of the present invention, a network device for communicating in a meshed network is disclosed. The device includes a communication interface configured to receive a request to communicate with a host served by one of a plurality of nodes in the meshed network. The device also includes a connection engine configured to dynamically establish a connection to the one node based on determining whether the one node is within a list specifying connectivity relationships for a portion of the plurality of nodes in response to the request.

According to another aspect of an embodiment of the present invention, a communication system having a meshed topology is disclosed. The system includes a first node configured to receive a request to establish a communication session with a host. The system also includes a second node configured to communicate with the first node and to provide connectivity for the host. The first node is further configured to determine whether the second node is specified in a list indicating peer relationships to the first node in response to the request. The first node dynamically establishes a connection to the one node based on the determination.

According to another aspect of an embodiment of the present invention, a network device for communicating over a meshed network including a plurality of nodes is disclosed. The device includes means for receiving a request to communicate with a host served by one of the plurality of nodes; and means for determining whether the one node is within a list specifying connectivity relationships for a portion of the plurality of nodes in response to the request. The device also includes means for dynamically establishing a connection to the one node based on the determination.

According to yet another aspect of an embodiment of the present invention, a computer-readable medium carrying one or more sequences of one or more instructions for communicating over a meshed network including a plurality of nodes is disclosed. The one or more sequences of one or more instructions include instructions which, when executed by one or more processors, cause the one or more processors to perform the step of receiving a request to communicate with a host served by one of the plurality of nodes. Another step includes determining whether the one node is within a list specifying connectivity relationships for a portion of the plurality of nodes in response to the request. Another step includes dynamically establishing a connection to the one node based on the determining step.

Still other aspects, features, and advantages of the present invention are readily apparent from the following detailed description, simply by illustrating a number of particular embodiments and implementations, including the best mode contemplated for carrying out the present invention. The present invention is also capable of other and different embodiments, and its several details can be modified in various obvious respects, all without departing from the spirit and scope of the present invention. Accordingly, the drawing and description are to be regarded as illustrative in nature, and not as restrictive.

### BRIEF DESCRIPTION OF THE DRAWINGS

The present invention is illustrated by way of example, and not by way of limitation, in the figures of the accompanying drawings and in which like reference numerals refer to similar elements and in which:

FIG. 1 is a diagram of a meshed communication system capable of dynamically managing connections and supporting performance enhancing proxies, according to an embodiment of the present invention;

FIGs. 2A and 2B are diagrams, respectively, of a node utilizing a peer relationship list for dynamic connection establishment in the system of FIG. 1, and of spoofing logic resident within the node;

FIG. 3 is a timing diagram of a process for supporting a communication session over a dynamically established connection, according to an embodiment of the present invention;

FIGs. 4A and 4B are flowcharts of a process for dynamically establishing a connection over the meshed network of FIG. 1;

FIG. 5 is a flowchart of a connection tear down process utilized by the nodes of FIG. 1;

FIG. 6 is a diagram of satellite network capable of providing dynamic connection establishment and tear down, according to an embodiment of the present invention; and

FIG. 7 is a diagram of a computer system that can support dynamic connection establishment and tear down, in accordance with an embodiment of the present invention.

### DESCRIPTION OF THE PREFERRED EMBODIMENT

A system, method, device, and software for providing dynamic connection establishment and tear down are described. In the following description, for the purposes of explanation, numerous specific details are set forth in order to provide a thorough understanding of the present invention. It is apparent, however, to one skilled in the art that the present invention may be practiced without these specific details or with an equivalent arrangement. In other instances, well-known structures and devices are shown in block diagram form in order to avoid unnecessarily obscuring the present invention.

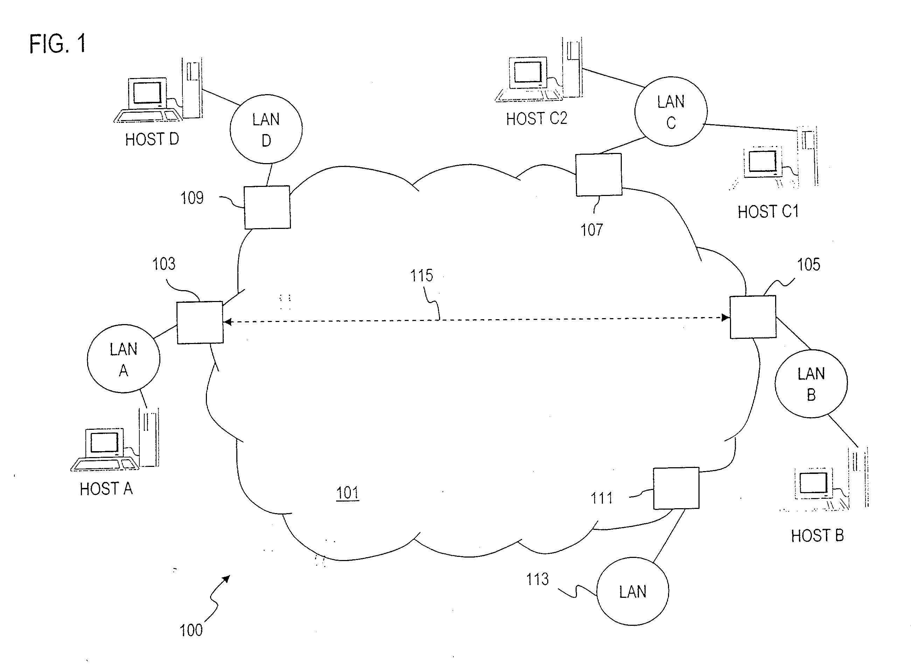

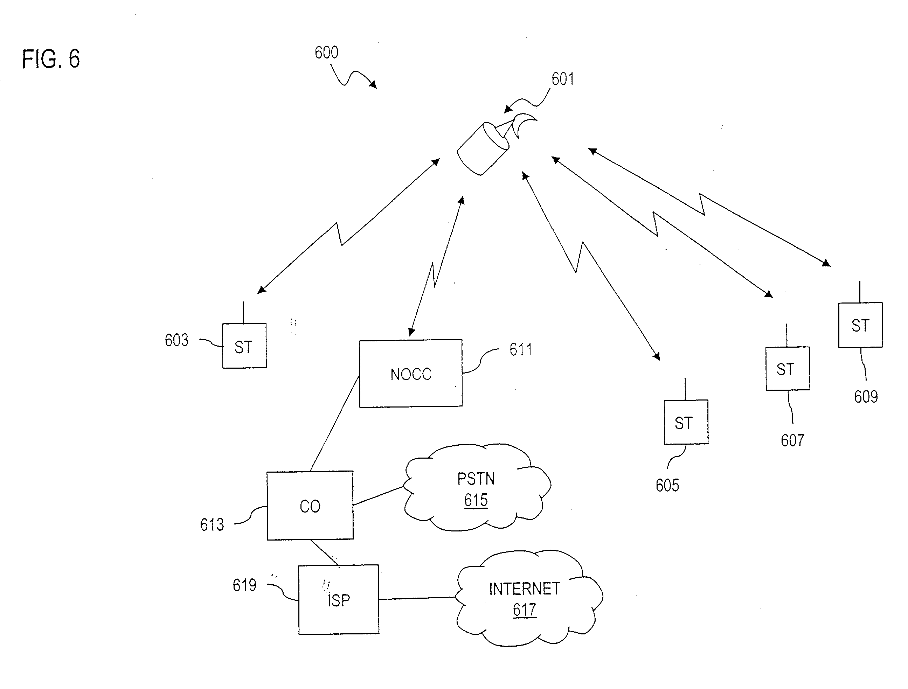

FIG. 1 is a diagram of a meshed communication system capable of dynamically managing connections and supporting performance enhancing proxies, according to an embodiment of the present invention. A communications system 100 includes a meshed network 101, which in an exemplary embodiment, has a topology that is fully meshed. As more fully described in FIG. 6, this system 100 can be implemented as a satellite communications system, in which a satellite provides meshed connectivity to multiple satellite terminals.

As shown in FIG. 1, the network 101 supports a number of nodes 103, 105, 107, 109, 111 to provide access for a variety of local area networks (LANs) and hosts. In particular, the node 103 has connectivity to LAN A, which includes a host A. Similarly, the node 105 serves LAN B, including host B. The other nodes 107, 109 also provide access to LAN C and LAN D, respectively. Each of these LANs C, D includes corresponding hosts C1, C2, and D.

According to one embodiment of the present invention, the meshed network 101 can be deployed as a wide area network (WAN) 101, which is maintained by a service provider (e.g., carrier). The nodes 103, 105, 107, 109, 111 may be any type of networking device with the capability to communicate with the WAN 101, such as a router, bridge, etc. Additionally, it is noted that the WAN 101 may be any type of network, such as a radio communication system (e.g., a satellite network, a digital cellular network, a packet radio network, a microwave network, etc.) or a terrestrial network (e.g., an optical network, etc.). As will be discussed latter, the nodes 103, 105, 107, 109, 111 possess a connection engine for dynamic establishment and tear down of connections among the nodes 103, 105, 107, 109, 111. For example, the node 103 can dynamically establish a connection 115 to the node 105, assuming the host A seeks to communicate with the host B. As used herein, the connection 115 is also referred to as a "backbone" connection, in that the network 101 can be implemented as a backbone network. Additionally, the backbone connections can be dynamically established using a performance enhancing proxy (PEP), as described below. Further, the backbone connections can be implemented, in an exemplary embodiment, according to a PEP backbone protocol, which is detailed in a co-pending application (Serial No. 09/905,502), entitled "Method and System for Using a Backbone Protocol to Improve Network Performance," filed July 13, 2001.

Performance enhancing proxy (PEP) functionality provides an alternative to a tailored protocol to perform a general class of functions termed "TCP spoofing," in order to improve TCP performance over impaired (i.e., high latency or high error rate) links. TCP spoofing involves an intermediate network device (the performance enhancing proxy (PEP)) intercepting and altering the behavior of the TCP connection in an attempt to improve its performance.

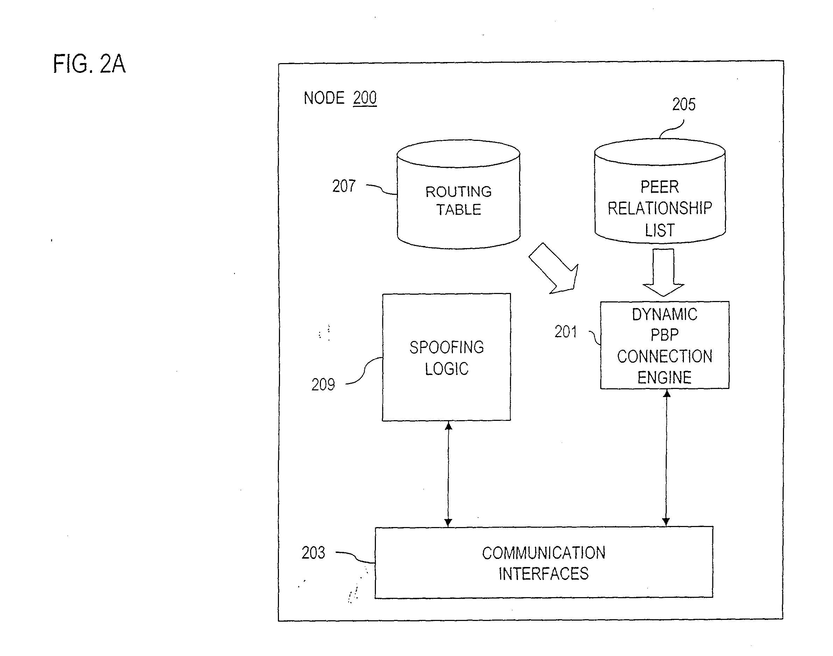

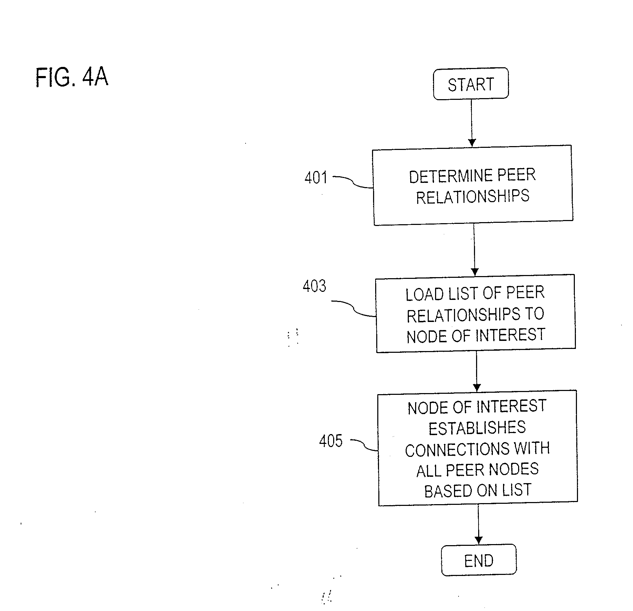

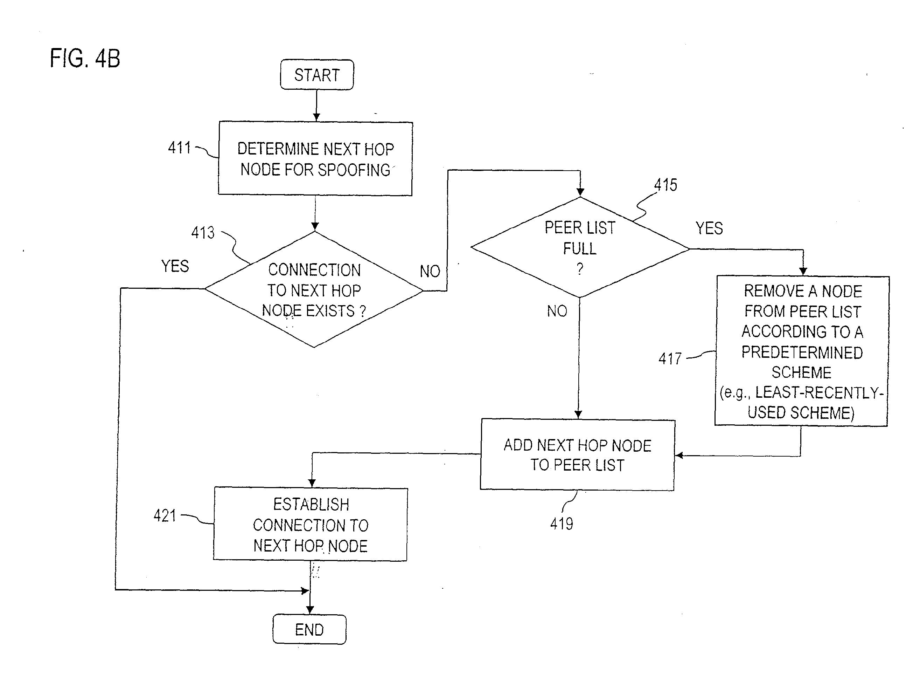

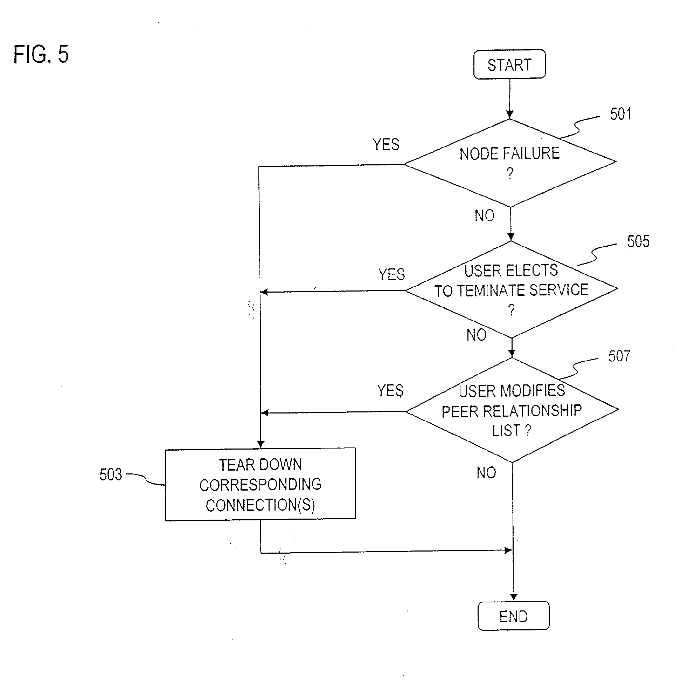

FIG. 2A is a diagram of a node utilizing a peer relationship list for dynamic connection establishment in the system of FIG. 1. A node 200 includes a connection engine 201 that couples to one or more communication interfaces 203, which receive messages from a host (e.g., host A) and transmit messages to a remote node. The connection engine 201 provides dynamic establishment and tear down of connections based on a list 205 that specifies the peer nodes associated with the node 200; these processes are further detailed in FIGs. 4 and 5. The connection engine 201, according to one embodiment of the present invention, employs a routing table 207 to determine how to reach the nodes specified in the peer relationship list. It is noted that the routing table 207 can be used to assist with the determination of the particular nodes that can be peers for the peer relationship list. The node 200 also includes a spoofing logic 209 to support spoofing of communication sessions between end hosts (e.g., TCP sessions).

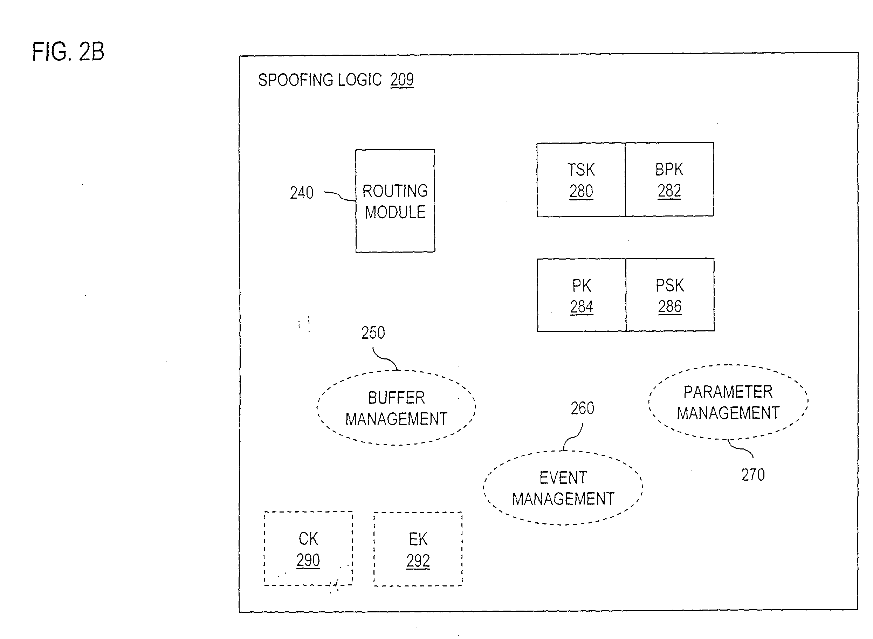

FIG. 2B illustrates a spoofing logic capable of supporting performance enhancing proxy (PEP) functions as implemented in the node 200, according to one embodiment of the present invention. As mentioned, the logic 209 couples to the communications interfaces 203, which, for example, include local area network (LAN) interfaces and wide area network (WAN) interfaces. The logic 209 also includes general functional modules: routing module 240, buffer management module 250, event management module 260, and parameter management module 270. Additionally, the logic 209 provides a TCP spoofing kernel (TSK) 280, a backbone protocol kernel (BPK) 282, a prioritization kernel (PK) 284, and a path selection kernel (PSK) 286. These four kernels essentially make up the functionality of the performance enhancing proxy.

In addition to the PEP kernels 280, 282, 284, and 286, the logic 209 can utilize a data compression kernel (CK) 290 and an encryption kernel (EK) 292. These kernels 280, 282, 284, 286, 290, and 292, as described above, facilitate communication between groups of hosts, by performing a variety of performance enhancing functions, either singly or in combination. These performance enhancing functions, for example, include selective TCP spoofing, three-way handshake spoofing, local data acknowledgement, TCP connection to backbone connection multiplexing, data compression/encryption, prioritization, and path selection.

Selective TCP Spoofing is performed by the TSK 280 and includes a set of user configurable rules that are used to determine which TCP connections should be spoofed. Selective TCP spoofing improves performance by not tying up TCP spoofing-related resources, such as buffer space, control blocks, etc., for TCP connections for which the user has determined that spoofing is not beneficial or required and by supporting the use of tailored parameters for TCP connections that are spoofed.

In particular, the TSK 280 discriminates among the various TCP connections based on the applications using them. That is, TSK 280 discriminates among these TCP connections to determine which connection should be spoofed as well as the manner in which the connection is spoofed; e.g., whether to spoof the three-way handshake, the particular timeout parameters for the spoofed connections, etc. TCP spoofing is then performed only for those TCP connections that are associated with applications for which high throughput or reduced connection startup latency (or both) is required. As a result, the TSK 280 conserves TCP spoofing resources for only those TCP connections for which high throughput or reduced connection startup latency (or both) is required. Further, the TSK 280 increases the total number of TCP connections which can be active before running out of TCP spoofing resources, since any active TCP connections which do not require high throughput are not allocated resources.

One criterion for identifying TCP connections of applications for which TCP spoofing should and should not be performed is the TCP port number field contained in the TCP packets being sent. In general, unique port numbers are assigned to each type of application. Which TCP port numbers should and should not be spoofed can be stored in the TSK 280. The TSK 280 is also re-configurable to allow a user or operator to reconfigure the TCP port numbers which should and should not be spoofed. The TSK 280 also permits a user or operator to control which TCP connections are to be spoofed based on other criteria. In general, a decision on whether to spoof a TCP connection may be based on any field within a TCP packet. The TSK 280 permits a user to specify which fields to examine and which values in these fields identify TCP connections that should or should not be spoofed. Another example of a potential use for this capability is for the user or operator to select the IP address of the TCP packet in order to control for which users TCP spoofing is performed. The TSK 280 also permits a user to look at multiple fields at the same time. As a result, the TSK 280 permits a user or operator to use multiple criteria for selecting TCP connections to spoof. For example, by selecting both the IP address and the TCP port number fields, the system operator can enable TCP spoofing for only specific applications from specific users.

The user configurable rules may include five exemplary criteria which can be specified by the user or operator in producing a selective TCP spoofing rule: Destination IP address; Source IP address; TCP port numbers (which may apply to both the TCP destination and source port numbers); TCP options; and IP differentiated services (DS) field. However, as indicated above, other fields within the TCP packet may be used.

As discussed above, in addition to supporting selective TCP spoofing rules for each of these criteria, AND and OR combination operators can be used to link criteria together. For example, using the AND combination operator, a rule can be defined to disable TCP spoofing for FTP data received from a specific host. Also, the order in which the rules are specified may be significant. It is possible for a connection to match the criteria of multiple rules. Therefore, the TSK 280 can apply rules in the order specified by the operator, taking the action of the first rule that matches. A default rule may also be set which defines the action to be taken for TCP connections which do not match any of the defined rules. The set of rules selected by the operator may be defined in a selective TCP spoofing selection profile.

As an example, assuming sufficient buffer space has been allocated to spoof five TCP connections, if four low-speed applications (i.e., applications which, by their nature, do not require high speed) bring up connections along with one high-speed application, the high-speed connection has access to only 1/5 of the available spoofing buffer space. Further, if five low speed connections are brought up before the high-speed connection, the high-speed connection cannot be spoofed at all. Using the TSK 280 selective spoofing mechanism, the low speed connections are not allocated any spoofing buffer space. Therefore, the high-speed connection always has access to all of the buffer space, improving its performance with respect to an implementation without the selective TCP spoofing feature of the TSK 280.

The TSK 280 also facilitates spoofing of the conventional three-way handshake. Three-Way handshake spoofing involves locally responding to a connection request to bring up a TCP connection in parallel with forwarding the connection requests across the backbone link 115. This allows the originating host (e.g., host A) to reach the point of being able to send the data it must send at local speeds, i.e. speeds that are independent of the latency of the backbone link 115. Three-way handshake spoofing allows the data that the host A needs to send to be sent to the destination host B without waiting for the end-to-end establishment of the TCP connection. For backbone links with high latency, this significantly reduces the time it takes to bring up the TCP connection and, more importantly, the overall time it takes to get a response (from a host A) to the data the host A sends.

A specific example in which this technique is useful relates to an Internet web page access application. With three-way handshake spoofing, a host's request to retrieve a web page can be on its way to a web server without waiting for the end-to-end establishment of the TCP connection, thereby reducing the time it takes to download the web page.

With Local Data Acknowledgement, the TSK 280 in the node 103 locally acknowledges data segments received from the host A. This allows the sending host A to send additional data immediately. More importantly, TCP uses received acknowledgements as signals for increasing the current TCP window size. As a result, local sending of the acknowledgements allows the sending host A to increase its TCP window at a much faster rate than supported by end-to-end TCP acknowledgements. The TSK 280 (i.e., the "spoofer") takes on the responsibility for reliable delivery of the data which it has acknowledged.

In the BPK 282, multiple TCP connections are multiplexed onto and carried by a single backbone connection. This improves system performance by allowing the data for multiple TCP connections to be acknowledged by a single backbone connection acknowledgement (ACK), significantly reducing the amount of acknowledgement traffic required to maintain high throughput across the backbone link 115. In addition, the BPK 282 selects a backbone connection protocol that is optimized to provide high throughput for the particular link. Different backbone connection protocols can be used by the BPK 282 with different backbone links without changing the fundamental TCP spoofing implementation. The backbone connection protocol selected by the BPK 282 provides appropriate support for reliable, high speed delivery of data over the backbone link 115, hiding the details of the impairments (for example high latency) of the link from the TCP spoofing implementation.

The multiplexing by the BPK 282 allows for the use of a backbone link protocol which is specifically tailored for use with the particular link and provides a technique to leverage the performance of the backbone link protocol with much less dependency upon the individual performance of the TCP connections being spoofed than conventional methods. Further, the ability to tailor the backbone protocol for different backbone links makes the present invention, according to one embodiment, applicable to many different systems.

The logic 209 may optionally include a data compression kernel 290 for compressing TCP data and an encryption kernel 292 for encrypting TCP data. Data compression increases the amount of data that can be carried across the backbone connection. Different compression algorithms can be supported by the data compression kernel 290 and more than one type of compression can be supported at the same time. The data compression kernel 290 may optionally apply compression on a per-TCP connection basis, before the TCP data of multiple TCP connections is multiplexed onto the backbone connection or on a per-backbone connection basis, after the TCP data of multiple TCP connections has been multiplexed onto the backbone connection. Which option is used is dynamically determined based on user configured rules and the specific compression algorithms being utilized. Exemplary data compression algorithms are disclosed in U.S. Patent Nos. 5,973,630, 5,955,976, the entire contents of which are hereby incorporated by reference. The encryption kernel 292 encrypts the TCP data for secure transmission across the backbone link 115. Encryption may be performed by any conventional technique.

The PK 284 provides prioritized access to the backbone link capacity. For example, the backbone connection can be divided into *N*(*N*>1) different sub-connections, each having a different priority level. In one exemplary embodiment, four priority levels can be supported. The PK 284 uses user-defined rules to assign different priorities, and therefore different sub-connections of the backbone connection, to different TCP connections. It should be noted that PK 284 may also prioritize non-TCP traffic (e.g., UDP (User Datagram Protocol) traffic) before sending the traffic across the backbone link 115.

The PK 284 also uses user-defined rules to control how much of the backbone link 115 capacity is available to each priority level. Exemplary criteria which can be used to determine priority include the following: Destination IP address; Source IP address; IP next protocol; TCP port numbers (which may apply to both the TCP destination and source port numbers); UDP port numbers (which may apply to both the UDP destination and source port numbers); and IP differentiated services (DS) field. The type of data in the TCP data packets may also be used as a criterion. For example, video data could be given highest priority. Mission-critical data could also be given high priority. As with selective TCP spoofing, any field in the IP packet can be used by PK 284 to determine priority. However, it should be noted that under some scenarios the consequence of using such a field may cause different IP packets of the same flow (e.g., TCP connection) to be assigned different priorities; these scenarios should be avoided.

As mentioned above, in addition to supporting selective prioritization rules for each of these criteria, AND and OR combination operators can be used to link criteria together. For example, using the AND combination operator, a rule can be defined to assign a priority for Simple Network Management Protocol (SNMP) data received from a specific host. Also, the order in which the rules are specified may be significant. It is possible for a connection to match the criteria of multiple rules. Therefore, the PK 284 can apply rules in the order specified by the operator, taking the action of the first rule that matches. A default rule may also be set which defines the action to be taken for IP packets which do not match any of the defined rules. The set of rules selected by the operator may be defined in a prioritization profile.

As regards the path selection functionality, the PSK 286 is responsible for determining which path an IP packet should take to reach its destination. The path selected by the PSK 286 can be determined by applying path selection rules. The PSK 286 also determines which IP packets should be forwarded using an alternate path and which IP packets should be dropped when one or more primary paths fail. Path selection parameters can also be configured using profiles. The path selection rules may be designed to provide flexibility with respect to assigning paths while making sure that all of the packets related to the same traffic flow (e.g., the same TCP connection) take the same path (although it is also possible to send segments of the same TCP connection via different paths, this segment "splitting" may have negative side effects). Exemplary criteria that can be used to select a path include the following: priority of the IP packet as set by the PK 284 (should be the most common criterion): Destination IP address; Source IP address; IP next protocol; TCP port numbers (which may apply to both the TCP destination and source port numbers); UDP port numbers (which may apply to both the UDP destination and source port numbers); and IP differentiated services (DS) field. Similar to selective TCP spoofing and prioritization, the PSK 284 may determine a path by using any field in the IP packet.

As with the prioritization criteria (rules) the AND and OR combination operators can be used to link criteria together. Therefore, the PSK 286 can apply rules in the order specified by the operator, taking the action of the first rule that matches. A default rule may also be set which defines the action to be taken for IP packets which do not match any of the defined rules. The set of rules selected by the operator may be defined in a path selection profile.

By way of example, a path selection rule may select the path based on any of the following path information in which IP packets match the rule: a primary path, a secondary path, and a tertiary path. The primary path is be specified in any path selection rule. The secondary path is used only when the primary path has failed. If no secondary path is specified, any IP packets that match the rule can be discarded when the primary path fails. The tertiary path is specified only if a secondary path is specified. The tertiary path is selected if both the primary and secondary paths have failed. If no tertiary path is specified, any IP packets that match the rule can be discarded when both the primary and secondary paths fail. Path selection may be generalized such that the path selection rule can select up to *N* paths where the Nth path is used only if the (*N*-1)^{th} path fails. The example above where *N*=3 is merely illustrative, although *N* is typically a fairly small number.

The operation of the system 100 is described as follows. First, a backbone connection is established between the nodes 103, 105, located at each end of the backbone link 115 for which TCP spoofing is desired. Whenever an host A initiates a TCP connection, the TSK 280 of the logic 209 of the node 103 local to the host A checks its configured selective TCP spoofing rules. If the rules indicate that the connection should not be spoofed, the logic 209 allows the TCP connection to flow end to end unspoofed. If the rules indicate that the connection should be spoofed, the spoofing logic 209 locally responds to the host's TCP three-way handshake. In parallel, the spoofing logic 209 sends a message across the backbone link 115 to its peer node 105 requesting initiation of a TCP three-way handshake with the host B on its side of the backbone link 115. Data is then exchanged between the host A in which the logic 209 of the node 103 locally acknowledges the received data and forwards it across the backbone link 115 via the high speed backbone connection, compressing the data as appropriate based on the configured compression rules. The priority of the TCP connection is determined when the connection is established. The BPK 282 can multiplex the connection with other received connections over a single backbone connection, the PK 284 determines the priority of the connection and the PSK 286 determines the path the connection is to take.

The logic 209, as described above, advantageously improves network performance by utilizing one or more of the following techniques: by allocating TCP spoofing-related resources, such as buffer space, control blocks, etc., only to TCP connections for which spoofing is beneficial; by spoofing the three-way handshake to decrease data response time; by reducing the number of ACKs which are transmitted by performing local acknowledgement and by acknowledging multiple TCP connections with a single ACK; by performing data compression to increase the amount of data that can be transmitted; by assigning priorities to different connections; by defining multiple paths for connections to be made; and by manipulating the TCP window sizes. It is recognized that the present invention can also employ other spoofing techniques.

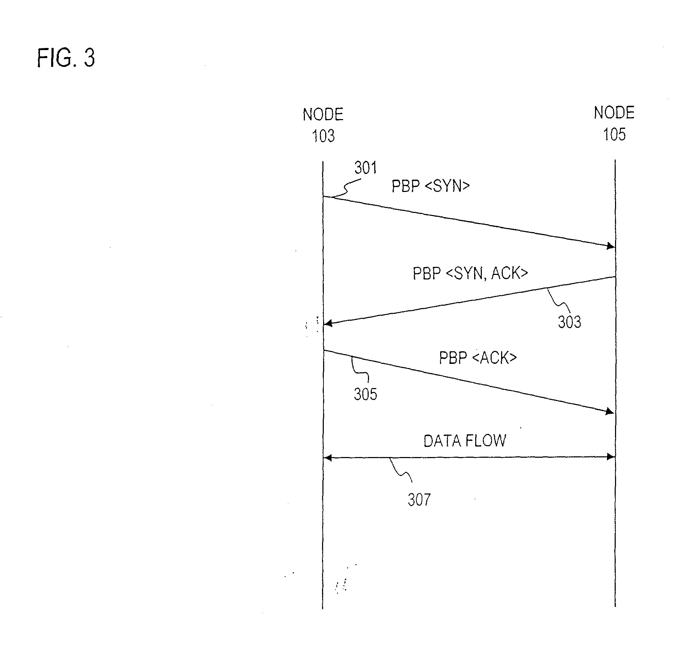

FIG. 3 is a timing diagram of a process for supporting a communication session over a dynamically established connection, according to an embodiment of the present invention. The nodes 103, 105, which respectively serve host A and host B (not shown), establish a connection in response to a stimulus such as downloading of a peer relationship list.

Under this scenario, it is assumed that the node 103 is a source node and the node 105 is the next hop (destination node), in support of communication initiated by host A to host B. The node 103, as in step 301, sends a synchronize (SYN) signal to the next hop node 105 to establish a PEP backbone protocol (PBP) connection, in form of a corresponding PBP <SYN> message. In response to the received PBP <SYN> message, the destination node 105 acknowledges with a PBP <SYN, ACK> message, per step 303. Next, the source node 103 submits a PBP <ACK> message to the node 105, as in step 305. Thereafter a PBP connection is established between the nodes 103, 105 (step 307). At this point, a dynamic connection 115 is established between the nodes 103, 105, thereby enabling communication between hosts A and B. The above procedure can be performed for each of the peer nodes that is enumerated in the peer relationship list of the node 103.

FIGs. 4A and 4B are flowcharts of a process for dynamically establishing a connection over the meshed network of FIG. 1. The mechanism for dynamic connection establishment relies on the peer relationship list, as described previously. This list, according to one embodiment of the present invention, can be created by the service provider of the network 101. FIG. 4A shows how the peer relationship list is developed and deployed in the nodes 103, 105, 107, 109, 111.

Table 1, below, provides an exemplary routing table for node 103 in the meshed network 101.

**Table 1**

| **Destination** | **Next-Hop Node** |
|---|---|
| Host B | Node 105 |
| LAN C | Node 107 |
| LAN D | Node 109 |
| Default | Node 111 |

The above routing table can specify, according to one embodiment of the present invention, the next-hop nodes using Internet Protocol (IP) addresses. It is noted that the routing table includes a default route in the event that the node 103 cannot identify a next-hop node; in this example, the default next-hop node is designated as the node 111, which is connected to LAN 113. Upon reaching the default node 111, the traffic from the source node 103 can be redirected to the correct next hop node.

For the purposes of explanation, it is assumed that a dynamic connection is established between the node 103 and the node 105. Table 2 shows an exemplary peer list for the node 103; it is noted that each of the other nodes 105-111 would be associated with a different peer list. According to this list, the connection to node 107 from the node 103 is least-recently used. Therefore, if the list cannot handle more entries, the node 107 would be removed from the list (as described with respect to FIG. 4B).

**Table 2**

| **Peer Node** | **Least-Recently Used** |
|---|---|
| Node 105 | |
| Node 109 | |
| Node 107 | X |

Initially, as in step 401, the peer relationships are determined for the node 103 to create a list of peer nodes that the node 103 seeks to associate with; this determination can be based on historical data, traffic engineering, etc. Next, in step 403, the list is loaded into the node of interest, which in this case is the node 103. Alternatively, the list can be generated, in which initially no entries exist. Based on the peer relationship list, the node 103 establishes connections with all such peer nodes within the list, per step 405.

In this scenario, the host A, which is served by the node 103, seeks to communicate with the host B, served by the node 105. Thus, the host A submits a request to establish a communication session with the host B to the node 103; the request may include data. The request, for example, may be in form of a TCP <SYN> message. The request provides a stimulus for the node 103 to determine the next-hop node for spoofing, per step 411 (shown in FIG. 4B). In this example, the next-hop node is determined, per a routing table, to be the node 105. The node 103 then checks whether a connection exists for the node 105, per step 413. If the node 105 is already in the peer relationship list, then no connection needs to be established. However, if no connection exists for the next-hop node (i.e., node 105), then the source node 103 checks, as in step 415, whether the list is "full." If the list is full, then a node needs to be removed from the peer list according to a predetermined scheme, per step 417. Any number of algorithms or schemes can be employed, such as a least-recently-used scheme. In a least-recently-used scheme, the node in the list that has a connection that has been least recently used is eliminated. In step 419, the next hop node 105 is added. Accordingly, the node 103 establishes a dynamic connection 115 with the node 105, per step 421.

FIG. 5 is a flowchart of a connection tear down process utilized by the nodes of FIG. 1. Continuing with the example of FIGs. 4A and 4B, the connections with the peer nodes can be torn down for any variety of reasons, some of which are described with respect to FIG. 5. In step 501, the node 103 can experience a failure; if this is so, the connection is eliminated, per step 503. The connection can also be torn down if it is determined that the user (or service provider) of the node 103 terminates the service, as in step 505, or the user modifies the peer relationship list to remove a node that has an established connection (per step 507). For example, issuance of a reset message, PBP <RST> segment, effectively tearing down the PBP connection.

FIG. 6 is a diagram of satellite network capable of providing dynamic connection establishment and tear down, according to an embodiment of the present invention. In particular, the system of FIG. 6 illustrates a specific implementation of the system of FIG. 1, in which the meshed network 101 is a satellite network and the nodes 103, 105, 107, 109, 111 are in form of satellite terminals. A communication system 600 includes a satellite 601 that supports communication among satellite terminals (STs) 603, 605, 607, and 609. System 600 employs a Network Operations Control Center (NOCC) 611 to manage and control communication services and operations. In an exemplary embodiment, the STs 603, 605, 607, and 609 are Very Small Aperture (VSAT) terminals. Under this architecture, users can communicate from one VSAT ST to another directly in one satellite hop. That is, the system 600 provides full mesh connectivity.

Satellite 601 contains a fast packet switch (FPS) (not shown) to process data packets that are exchanged across system 600. Exemplary switches include an ATM (Asynchronous Transfer Mode) switch, and a Gigabit Ethernet switch; it is recognized by one of ordinary skill in the art that any type of switch can be utilized. The FPS transfers the packets that the payload of the satellite 601 receives on the uplinks to the proper downlinks. The payloads of satellite 601 may include other components, such as uplink antenna, down-converters, switch matrix, demodulator banks, and phased-array downlink antenna; these other components are well known, and thus, are not described in detail.

Unlike conventional bent-pipe satellite systems, satellite 601 demodulates fixed-length packets that are received from STs on uplink spot beams, queues the packets for the proper downlink destination based on packet header information, and then modulates the packets for transmission on the specified downlink spot beam. Satellite 601 employs spot beams and possesses processing functions that permit greater power and spectral efficiency than traditional bent-pipe satellites. Further, satellite 601 can replicate individual packets that are received on the uplink and send these packets to multiple downlink spot beam destinations. In this manner, satellite 601 can retain broad distribution capabilities of the bent-pipe satellite systems, while providing flexibility in terms of bandwidth allocations.

The satellite 601 performs the necessary bandwidth control functions, in conjunction with the NOCC 611. In system 600, STs 603, 605, 607, and 609 originate traffic from a particular coverage area and may exchange data among the other STs. The generated traffic from these STs 603, 605, 607, and 609 is transferred through the FPS and terminates at destination STs (not shown) within the same and/or different coverage area. That is, the destination STs can be within the same coverage area as the originating STs.

In an exemplary embodiment, a connection that is established between a source ST and a destination ST is controlled by the satellite 601 and the NOCC 611. The NOCC 611, which is based on the ground, provides management functions for the system 600. For example, an ST needs to obtain authorization from the NOCC 611 before making a request to the satellite 601. The NOCC 611 keeps track of the total uplink (and downlink) bandwidth available for connections and will block a connection request if there is insufficient satellite capacity available to satisfy the request.

The satellite 601 implements the bandwidth control function, which includes controlling the allocation of uplink channels and timeslots and mitigating downlink congestion. Satellite 601 examines the requested bandwidth and replies with grants based on downlink resource availability. In an exemplary embodiment, TDMA (Time Division Multiple Access)/FDMA (Frequency Division Multiple Access) uplink channels carry traffic that is regulated by request/grant bandwidth control processes.

The CO 613 provides access to the public switched telephone network (PSTN) 615. In this example, the CO 613 relays traffic from the PSTN 615 as well as the Internet 617, to which the CO 613 is connected via an Internet Service Provider (ISP) 619.

Although embodiments of the present invention are explained with respect to a satellite communication system, it is recognized that the present invention can be practiced in any type of meshed network, including terrestrial systems (e.g., microwave systems), and radio systems (e.g., cellular systems, packet radio networks, etc.).

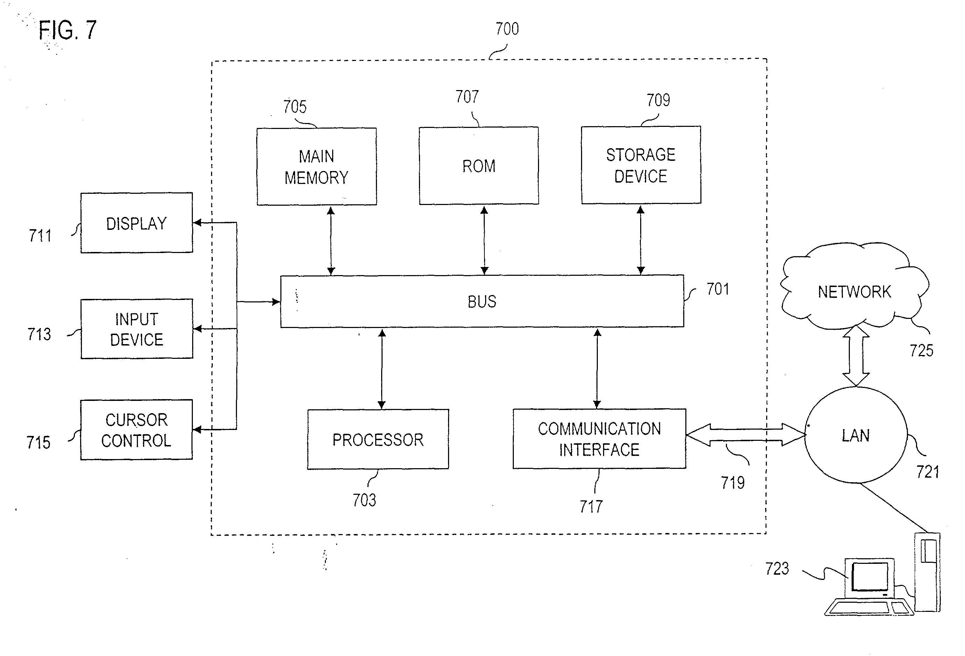

FIG. 7 shows a computer system 700 upon which an embodiment according to the present invention can be implemented. The computer system 700 includes a bus 701 or other communication mechanism for communicating information, and a processor 703 coupled to the bus 701 for processing information. The computer system 700 also includes main memory 705, such as a random access memory (RAM) or other dynamic storage device, coupled to the bus 701 for storing information and instructions to be executed by the processor 703. Main memory 705 can also be used for storing temporary variables or other intermediate information during execution of instructions to be executed by the processor 703. The computer system 700 further includes a read only memory (ROM) 707 or other static storage device coupled to the bus 701 for storing static information and instructions for the processor 703. A storage device 709, such as a magnetic disk or optical disk, is additionally coupled to the bus 701 for storing information and instructions.

The computer system 700 may be coupled via the bus 701 to a display 711, such as a cathode ray tube (CRT), liquid crystal display, active matrix display, or plasma display, for displaying information to a computer user. An input device 713, such as a keyboard including alphanumeric and other keys, is coupled to the bus 701 for communicating information and command selections to the processor 703. Another type of user input device is cursor control 715, such as a mouse, a trackball, or cursor direction keys for communicating direction information and command selections to the processor 703 and for controlling cursor movement on the display 711.

According to one embodiment of the invention, the processes of FIGs. 4 and 5 are provided by the computer system 700 in response to the processor 703 executing an arrangement of instructions contained in main memory 705. Such instructions can be read into main memory 705 from another computer-readable medium, such as the storage device 709. Execution of the arrangement of instructions contained in main memory 705 causes the processor 703 to perform the process steps described herein. One or more processors in a multi-processing arrangement may also be employed to execute the instructions contained in main memory 705. In alternative embodiments, hard-wired circuitry may be used in place of or in combination with software instructions to implement the embodiment of the present invention. Thus, embodiments of the present invention are not limited to any specific combination of hardware circuitry and software.

The computer system 700 also includes a communication interface 717 coupled to bus 701. The communication interface 717 provides a two-way data communication coupling to a network link 719 connected to a local network 721. For example, the communication interface 717 may be a digital subscriber line (DSL) card or modem, an integrated services digital network (ISDN) card, a cable modem, or a telephone modem to provide a data communication connection to a corresponding type of telephone line. As another example, communication interface 717 may be a local area network (LAN) card (e.g. for Ethernet™ or an Asynchronous Transfer Model (ATM) network) to provide a data communication connection to a compatible LAN. Wireless links can also be implemented. In any such implementation, communication interface 717 sends and receives electrical, electromagnetic, or optical signals that carry digital data streams representing various types of information. Further, the communication interface 717 can include peripheral interface devices, such as a Universal Serial Bus (USB) interface, a PCMCIA (Personal Computer Memory Card International Association) interface, etc.

The network link 719 typically provides data communication through one or more networks to other data devices. For example, the network link 719 may provide a connection through local network 721 to a host computer 723, which has connectivity to a network 725 (e.g. a wide area network (WAN) or the global packet data communication network now commonly referred to as the "Internet") or to data equipment operated by service provider. The local network 721 and network 725 both use electrical, electromagnetic, or optical signals to convey information and instructions. The signals through the various networks and the signals on network link 719 and through communication interface 717, which communicate digital data with computer system 700, are exemplary means for bearing the information and instructions.

The computer system 700 can send messages and receive data, including program code, through the network(s), network link 719, and communication interface 717. In the Internet example, a server (not shown) might transmit requested code belonging to an application program for implementing an embodiment of the present invention through the network 725, local network 721 and communication interface 717. The processor 704 may execute the transmitted code while being received and/or store the code in storage device 79, or other non-volatile storage for later execution. In this manner, computer system 700 may obtain application code in the form of a carrier wave.

The term "computer-readable medium" as used herein refers to any medium that participates in providing instructions to the processor 704 for execution. Such a medium may take many forms, including but not limited to non-volatile media, volatile media, and transmission media. Non-volatile media include, for example, optical or magnetic disks, such as storage device 709. Volatile media include dynamic memory, such as main memory 705. Transmission media include coaxial cables, copper wire and fiber optics, including the wires that comprise bus 701. Transmission media can also take the form of acoustic, optical, or electromagnetic waves, such as those generated during radio frequency (RF) and infrared (IR) data communications. Common forms of computer-readable media include, for example, a floppy disk, a flexible disk, hard disk, magnetic tape, any other magnetic medium, a CD-ROM, CDRW, DVD, any other optical medium, punch cards, paper tape, optical mark sheets, any other physical medium with patterns of holes or other optically recognizable indicia, a RAM, a PROM, and EPROM, a FLASH-EPROM, any other memory chip or cartridge, a carrier wave, or any other medium from which a computer can read.

Various forms of computer-readable media may be involved in providing instructions to a processor for execution. For example, the instructions for carrying out at least part of the present invention may initially be borne on a magnetic disk of a remote computer. In such a scenario, the remote computer loads the instructions into main memory and sends the instructions over a telephone line using a modem. A modem of a local computer system receives the data on the telephone line and uses an infrared transmitter to convert the data to an infrared signal and transmit the infrared signal to a portable computing device, such as a personal digital assistant (PDA) and a laptop. An infrared detector on the portable computing device receives the information and instructions borne by the infrared signal and places the data on a bus. The bus conveys the data to main memory, from which a processor retrieves and executes the instructions. The instructions received by main memory may optionally be stored on storage device either before or after execution by processor.

Accordingly, the present invention provides an approach for dynamically establishing and tearing down backbone connections in a meshed network. The present invention advantageously enhances efficient utilization of system resources, while improving scalability.

While the present invention has been described in connection with a number of embodiments and implementations, the present invention is not so limited but covers various obvious modifications and equivalent arrangements, which fall within the purview of the appended claims.

## Claims

1. A method for communicating over a meshed network (101) including a plurality of nodes (103, 105, 107, 109, 111), the method comprising:
receiving a request to communicate with a host (A, B, C1, C2, D) served by one of the plurality of nodes (103, 105, 107, 109, 111);
determining whether the one node (103, 105, 107, 109, 111) is within a list specifying connectivity relationships for a portion of the plurality of nodes (103, 105, 107, 109, 111) in response to the request; and
dynamically establishing a connection to the one node (103, 105, 107, 109, 111) based on the determining step.

2. A method according to claim 1, further comprising:
selectively removing another node (103, 105, 107, 109, 111) from the list; and
adding the one node (103, 105, 107, 109, 111) to the list.

3. A method according to claim 2, wherein the removing step is performed according to a prescribed scheme including a least-recently-used scheme.

4. A method according to claim 1, further comprising:
performing spoofing of a communication session with the host (A, B, C1, C2, D) over the established connection.

5. A method according to claim 1, further comprising:
establishing a plurality of connections for the nodes (103, 105, 107, 109, 111) specified in the list.

6. A method according to claim 1, further comprising:
determining that the one node (103, 105, 107, 109, 111) is the next hop based upon a routing table.

7. A network device for communicating in a meshed network (101), the device comprising:
a communication interface (203) configured to receive a request to communicate with a host (A, B, C1, C2, D) served by one of a plurality of nodes (103, 105, 107, 109, 111) in the meshed network (101); and
a connection engine (201 ) configured to dynamically establish a connection to the one node (103, 105, 107, 109, 111) based on determining whether the one node (103, 105, 107, 109, 111 ) is within a list specifying connectivity relationships for a portion of the plurality of nodes (103, 105, 107, 109, 111) in response to the request.

8. A device according to claim 7, wherein the connection engine (201) is further configured to selectively remove another node (103, 105, 107, 109, 111) from the list, and to add the one node (103, 105, 107, 109, 111) to the list.

9. A device according to claim 8, wherein the connection engine (201) removes the other node (103, 105, 107, 109, 111 ) according to a prescribed scheme including a least-recently-used scheme.

10. A device according to claim 7, further comprising:
logic configured to spoof a communication session with the host (A, B, C1, C2, D) over the established connection.

11. A device according to claim 7, wherein the connection engine (201) establishes a plurality of connections for the nodes (103, 105, 107, 109, 111) specified in the list.

12. A device according to claim 7, wherein the connection engine (201) determines that a next hop is the one node (103, 105, 107, 109, 111) based upon a routing table.

13. A communication system having a meshed topology, the system comprising:
a first node (103, 105, 107, 109, 111) configured to receive a request to establish a communication session with a host (A, B, C1, C2, D); and
a second node (103, 105, 107, 109, 111) configured to communicate with the first node (103, 105, 107, 109, 111) and to provide connectivity for the host (A, B, C1, C2, D),
wherein the first node (103, 105, 107, 109, 111) is further configured to determine whether the second node (103, 105, 107, 109, 111) is specified in a list indicating peer relationships to the first node (103, 105, 107, 109, 111) in response to the request, the first node (103, 105, 107, 109, 111) dynamically establishing a connection to the one node (103, 105, 107, 109, 111 ) based on the determination.

14. A system according to claim 13, wherein the first node (103, 105, 107, 109, 111) is further configured to selectively remove another node (103, 105, 107, 109, 111) from the list, and to add the second node (103, 105, 107, 109, 111) to the list.

15. A system according to claim 14, wherein the first node (103, 105, 107, 109, 111) removes the other node (103, 105, 107, 109, 111) according to a prescribed scheme including a least-recently-used scheme.

16. A system according to claim 13, wherein the first node (103, 105, 107, 109, 111) is further configured to spoof the communication session over the established connection between the first node (103, 105, 107, 109, 111) and the second node (103, 105, 107, 109, 111).

17. A system according to claim 13, wherein the first node (103, 105, 107, 109, 111) establishes a plurality of connections for other nodes (103, 105, 107, 109, 111) specified in the list.

18. A system according to claim 13, wherein the first node (103, 105, 107, 109, 111) determines that a next hop is the second node (103, 105, 107, 109, 111) based upon a routing table.
